# FASCICULE DE BREVET EUROPEEN

(11) **EP 0 601 937 B1**
(45) Date de publication et mention de la délivrance du brevet: **02.04.1997**
(21) Numéro de dépôt: 93402989.3
(22) Date de dépôt: 10.12.1993
(51) Int. Cl.: B60R 19/24

(54) **Dispositif réglable de montage d'un pare-chocs sur une structure de véhicule automobile**
Verstellbare Stossfänger-Befestigungsvorrichtung auf einer Kraftfahrzeugstruktur
Adjustable bumper mounting device on a motor vehicle structure

(30) Priorité: 11.12.1992 FR 9214964
(43) Date de publication de la demande: 15.06.1994
(73) Titulaire: ECIA - EQUIPEMENTS ET COMPOSANTS POUR L'INDUSTRIE AUTOMOBILE, F-25400 Audincourt (FR)
(72) Inventeur: Battel, Alain, F-25400 Audincourt (FR); Pinard, Eric, F-25400 Audincourt (FR)
(74) Mandataire: Polus, Camille

(56) Documents cités:
- FR-A- 2 607 082
- US-A- 4 995 660
- US-A- 5 080 412

## Description

La présente invention concerne le secteur technique de l'automobile, et a plus particulièrement pour objet un dispositif réglable de montage d'un pare-chocs sur une structure de véhicule automobile terrestre du type défini dans le préambule de la revendication 1 et déjà connue, par exemple, par le document US-A-5 080 412 on US-A-4 995 660.

Comme le sait, les véhicules automobiles terrestres sont équipés de pare-chocs ou boucliers à l'avant et à l'arrière, pour des raisons de sécurité. Ces pare-chocs et leurs dispositifs de montage qui les associent à la structure ou coque du véhicule sont montés, le plus souvent par l'entremise de longerons qui prolongent habituellement cette coque ou structure vers l'avant et/ou vers l'arrière. Tous ces constituants sont conçus de manière à se déformer élastiquement ou non, irréversiblement, selon l'importance d'un choc, le plus souvent à composante longitudinale repérée par rapport à l'axe du véhicule, qu'ils doivent absorber. Pour des raisons de sécurité ainsi que d'entretien et de réparation, la déformation des constituants mis en cause se fait par "tranches" ou zones successives, en fonction de la vitesse relative à laquelle intervient le choc : les tranches concernées vont de l'extérieur vers l'intérieur du véhicule à mesure que cette vitesse relative croît afin que l'énergie du choc soit absorbée sans déformation notable de l'habitacle des occupants de manière à préserver la sécurité de ceux-ci.

Les pare-chocs ou boucliers sont généralement rapportés sur la coque ou structure et doivent s'y intégrer, en particulier pour des raisons d'esthétique, afin d'assurer la continuité avec des capots et hayons, blocs optiques et, s'il y a lieu calandres que la structure ou coque porte. Quel que soit le soin apporté à la confection de tels éléments et à leur assemblage, aucun ne satisfait aux cotes théoriques nominales qui sont contenues à l'intérieur de tolérances de fabrication. Il n'est pas rare que pour certains de ces éléments la position réelle sur le véhicule s'écarte de la position théorique nominale d'une valeur dont l'amplitude avoisine le centimètre.

On comprend donc qu'il soit nécessaire de disposer d'un certain nombre de degrés de liberté au moment de l'assemblage de manière à tenir compte de ces écarts de position lors de la mise en place ou accostage de ceux-ci les uns relativement aux autres.

Le but de l'invention est de remédier à ce type de difficulté à l'aide d'un dispositif réglable de montage d'un pare-choc sur une coque ou structure de véhicule automobile terrestre qui permet une certaine plage de débattement avec trois degrés de liberté selon l'axe longitudinal X, l'axe transversal Y et l'axe vertical Z traditionnels d'un véhicule.

L'invention a pour objet un dispositif réglable de montage d'un pare-choc sur une structure de véhicule automobile. Ce dispositif est remarquable notamment en ce qu'il comprend un support associé à la structure et fait d'un appui avec au moins une surface plane parallèle à l'axe longitudinal et à l'axe transversal, d'une butée perpendiculaire à l'axe longitudinal et d'un logement délimité par deux parois en vis-à-vis parallèles à cette surface plane, un étrier fait de deux branches qui sont parallèles et dont l'une au moins est destinée à reposer contre cette surface plane et qui sont reliées par un pont oblique, d'un embout longiligne qui est porté par le pont entre les branches avec une partie cylindrique attenante au pont et qui est destiné à être engagé dans le logement pour être au contact des parois de ce dernier et d'au moins une came centrée sur cette partie cylindrique qu'elle entoure au moins partiellement, un disque avec un ajour cylindrique qui est destiné à être monté sur cette partie cylindrique et qui présente un côté destiné à reposer contre la butée et un côté avec une contre-came destinée à coopérer avec cette came, un socle avec une embase cunéiforme qui présente une face oblique destinée à coopérer avec le pont et une face perpendiculaire à l'axe longitudinal et qui est transpercé d'au moins une boutonnière perpendiculaire aux branches et avec un piètement fixé à cette face et destiné à recevoir un pare-choc, et des moyens de fixation pour immobiliser notamment le socle une fois les réglages faits.

L'invention ressortira notamment de la lecture de la description et des revendications qui suivent ainsi que de l'examen du dessin annexé, donné seulement à titre d'exemple, où:
- La figure 1 est une vue en élévation longitudinale, partiellement en coupe, d'un mode de réalisation d'un dispositif selon l'invention, et
- la figure 2 est une vue partielle en perspective éclatée du mode de réalisation de la figure 1.

Les pare-chocs de véhicule automobiles terrestres et la manière de les monter sur une coque ou structure d'un véhicule étant bien connus dans la technique, on ne décrira dans ce qui suit que ce qui concerne directement ou indirectement l'invention. Pour le surplus l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé on décrira successivement chacun des constituants d'un dispositif réglable de montage d'un pare-chocs sur une structure de véhicule automobile selon l'invention avant d'en exposer la fabrication au besoin, et le montage et la mise en oeuvre.

Un dispositif réglable de montage d'un pare-choc sur une structure de véhicule automobile selon l'invention comprend, essentiellement, comme cela apparaît en particulier de l'examen des figures du dessin, un support 10, un étrier 20, un disque 30 et un socle 40 ainsi que des moyens de fixation 50.

Le dispositif suivant l'invention est destiné à associer un pare-chocs ou bouclier PC de tout type classique courant, à une coque ou structure de véhicule qui se prolonge, au moins vers l'avant du véhicule, par des longerons ou similaires. Le pare-chocs PC comprend, comme il est usuel, une peau ou revêtement extérieur R, un corps C et une poutre P.

Le support 10 est par exemple ménagé à l'extrémité libre des longerons dont il a été question précédemment. Le support 10 comprend un appui 11, simple ou de préférence double, avec au moins une surface 110 de préférence plane. Comme on le voit, la surface 110 est parallèle à un plan qui contient l'axe longitudinal X et l'axe transversal Y non référencé sur le dessin. Le support 10 comprend, aussi, une butée 12 constituée, par exemple, par un plan perpendiculaire à l'axe longitudinal X. Ce plan est formé par exemple par l'extrémité libre d'un longeron. Le support 10 comprend, aussi, un logement 13 délimité par deux parois 130 en vis-à-vis, parallèles à la surface plane 110, c'est-à-dire à un plan qui contient l'axe longitudinal X et l'axe transversal Y. De préférence ce logement 13 est comme illustré une cavité ou lumière ménagée directement ou non à l'intérieur, habituellement creux, du longeron obtenu par des techniques traditionnelles et fait le plus souvent de tôles embouties mécanosoudées.

L'étrier 20 se présente à la manière d'un U, gauche, avec deux branches 21 parallèles dont l'une au moins est destinée à reposer contre la surface plane 110 qui lui correspond; ces branches 21 sont reliées par un pont 22 oblique. L'étrier 20 comprend, aussi, un embout 23 longiligne qui est porté par ou fixé au pont 22, entre les branches 21, avec une partie 230 cylindrique attenante au pont 22. Comme on peut l'observer, l'axe de l'embout longiligne 23 est parallèle aux branches 21. L'embout 23 est destiné à être engagé, au moins partiellement, dans le logement 13 pour être au contact des parois 130 de ce dernier. L'étrier 20 comprend, aussi, une came 24 centrée sur la partie cylindrique 230 de l'embout 23 qu'elle entoure au moins partiellement. Cette came est, par exemple, faite d'au moins une et de préférence deux rampes hélicoïdales comme dessinés.

Le disque 30 est transpercé, de part en part, en son centre d'un ajour 31 cylindrique qui est destiné à être monté sur la partie cylindrique 230 de l'embout 23 de manière à pouvoir tourner relativement à celui-ci. Ce disque présente un côté 301 de préférence plan qui est destiné à reposer contre la butée 12, et un côté 302 avec une contre-came 32 destinée à coopérer avec la came 24. De préférence, cette contre-came est constituée d'au moins une rampe et de préférence deux, hélicoïdales qui sont adaptées à la came 24 pour les raisons qui apparaîtront par la suite. S'il y a lieu, le disque est muni extérieurement de cannelures pour les raisons qui apparaîtront par la suite.

Le socle 40 comprend une embase 41 cunéiforme ou prismatique, qui présente une face 410 oblique destinée à coopérer avec le pont 22 et une face 411 de préférence plane, perpendiculaire à l'axe longitudinal X. Pour les raisons qui apparaîtront par la suite la perpendicularité de la face 411 avec l'axe longitudinal X résulte des inclinaisons correspondantes données à la face oblique 410 et au pont 22 destinés à coopérer l'un avec l'autre. L'embase 41 est transpercée d'au moins une boutonnière 42 et de préférence deux, qui s'étendent d'une face à l'autre et qui sont orientées perpendiculairement aux branches 21 de l'étrier 20, c'est-à-dire qui sont parallèles à l'axe vertical Z, non référencé sur le dessin comme illustré. Le socle 40 comprend un piètement 43 porté par ou fixé à la face plane 411 de l'embase 41, et destiné à recevoir le pare-chocs PC. De préférence le piètement 43 comprend un pilier 430 et une plaque 431. De préférence c'est cette plaque qui reçoit le pare-chocs qui y est fixé par toutes techniques traditionnelles connues, par exemple vissage, rivetage, soudage, collage, ...

Les moyens de fixation 50 servent à immobiliser en particulier l'étrier 20 et le socle 40 une fois les réglages faits. Ces moyens de fixation comprennent, par exemple, des trous 51 taraudés ou des écrous soudés ou encagés ménagés dans les branches 21 ou dans le pont oblique 22 et des boulons 52 traversant au moins une des boutonnières 42 de l'embase ou des fentes appropriées du support et vissés dans les trous taraudés ou écrous 51, comme illustré.

Tous les constituants d'un dispositif réglable de montage selon l'invention sont faits à partir de pièces métalliques ou en matières synthétiques, mises en forme, travaillées et fabriquées selon des techniques traditionnelles appropriées.

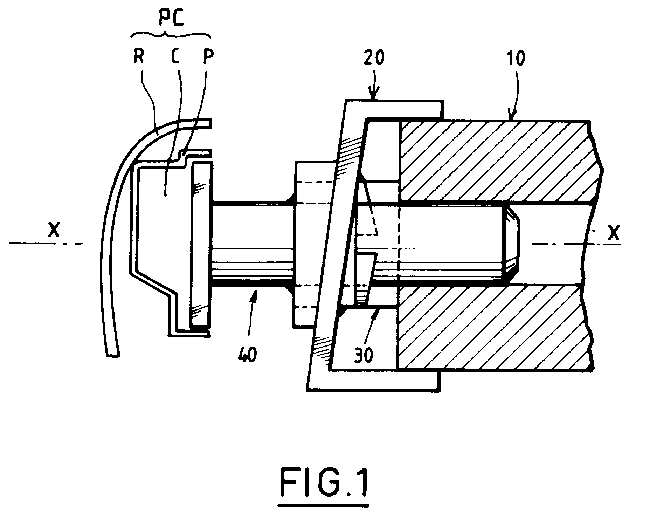

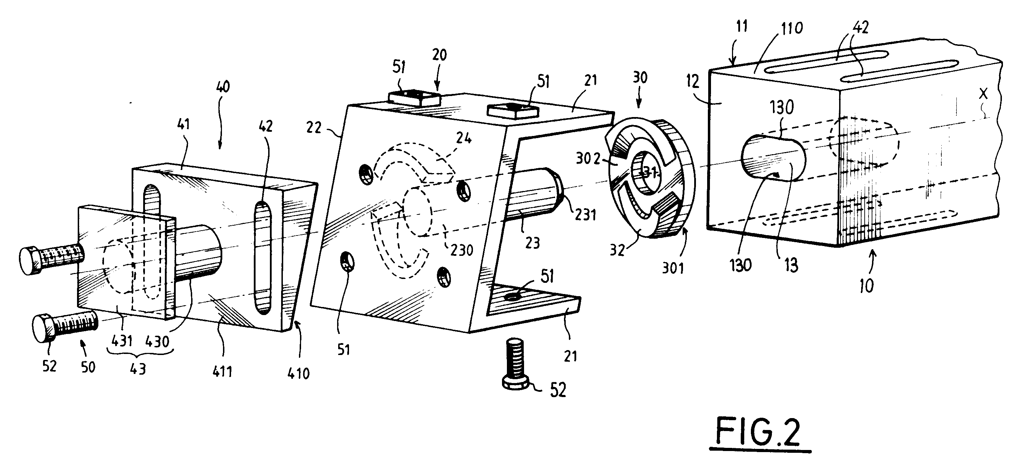

Tous ces éléments sont réunis, assemblés, montés comme cela résulte clairement en particulier de l'examen de la vue éclatée de la figure 2 et de la vue assemblée de la figure 1.

L'examen du dessin montre que la coopération de la face plane 110 de l'appui 11 du support 10 avec la branche 21 de l'étrier 20, ainsi que la coopération de l'embout 23 avec les parois 130 des logements 13 du support 10, autorise un degré de liberté parallèlement à l'axe transversal Y avec un guidage approprié. Le réglage selon ce degré de liberté et l'immobilisation sont obtenus par toutes techniques appropriées classiques. On observera que l'étrier 20 peut aussi se déplacer selon l'axe longitudinal X.

L'ajustement selon l'axe longitudinal X résulte de l'interposition du disque 30 entre la butée 12 du support 10 et le pont oblique 22 de l'étrier 20. En effet, le disque 30 qui peut tourner sur la partie cylindrique 230 de l'embout 23 sur lequel elle est enfilée, a son côté plan 301 en appui contre la butée 12 et la contre-came 32 portée par son côté 302 en appui contre la came 24 portée par le pont 22. Lorsqu'on fait tourner le disque dans un sens ou dans l'autre manuellement ou à l'aide d'un outil coopérant avec les cannelures ou à l'aide de toute autre technique appropriée, celui-ci agit en quelque sorte à la manière d'un écrou qui permet d'éloigner ou de rapprocher l'étrier 20 du support 10 en faisant coulisser, les uns par rapport aux autres, l'embout 23 et les branches 21 relativement au logement 13 et à l'appui 11 respectivement. En procédant de la sorte on a donc réglé la position de l'étrier 20 par rapport au support 10 parallèlement à la direction de l'axe longitudinal X et à celle de l'axe transversal Y.

On voit que le socle 40, grâce aux boutonnières et aux moyens de fixation 50, ne peut se déplacer relativement à l'étrier 20 que par une translation parallèle à l'axe vertical Z. La coopération du pont oblique 22 de l'étrier et de la face oblique 410 de l'embase 41 du socle 40 font que lors d'un réglage selon la direction de l'axe vertical Z, il en résulte un petit décalage aussi selon la direction de l'axe longitudinal X qui peut être facilement rectifié en faisant tourner le disque 30. On conçoit que suivant l'inclinaison donnée aux parties obliques et à la pente donnée aux cames, cette retouche de la position selon l'axe longitudinal X peut ne pas être nécessaire et selon le cas être considérée comme du "second ordre".

Tous réglages faits, on immobilise l'ensemble en position à l'aide des moyens de fixation.

Il est clair que les rôles de la came 24 et de la contre-came 32 peuvent être inversés et que la contre-came peut être par exemple constituée par un ou des doigts radiaux, protubérances ou similaires portés par le côté 302 du disque 30 ou inversement.

Pour faciliter l'introduction de l'embout 23 dans le logement 13 on peut munir son extrémité libre d'un chanfrein 231 ou bien, inversement, donner de l'"entrée" au logement.

Dans le mode de réalisation illustré, l'embout 23 est de préférence une tige, et le pilier 430 du piètement 43 du socle 40 est constitué d'un absorbeur d'énergie par exemple du type de celui qui est décrit dans le document FR 92 10 768 de la Demanderesse.

Il est clair que les réglages selon les trois degrés de liberté peuvent être faits dans un ordre différent de celui exposé auparavant. De même, les came et contre-came peuvent être inversées et placées sur la butée et le côté du disque qui lui fait face. De même, le sens de l'inclinaison des pont et face du socle peut être inversé.

On voit donc que grâce au dispositif réglable de montage d'un pare-chocs sur une structure ou coque de véhicule selon l'invention qui présente trois degrés de liberté parallèlement aux axes longitunal, transversal et vertical du véhicule automobile, il est possible de compenser et de rectifier les écarts qui résultent des tolérances de fabrication et de montage sans avoir à procéder à des retouches compliquées et longues.

Ce qui précède met bien en lumière les particularités, intérêts et avantages de l'invention.

## Revendications

1. Dispositif réglable de montage d'un pare-chocs sur une structure de véhicule automobile terrestre permettant une certaine plage de débattement avec trois degrés de liberté selon l'axe longitudinal (X), l'axe transversal (Y) et l'axe vertical (Z) traditionnels d'un véhicule, caractérisé en ce qu'il comprend un support (10) associé à la structure et fait d'un appui (11) avec au moins une surface (110) plane parallèle à l'axe longitudinal (X) et à l'axe transversal (Y) du véhicule, d'une butée (12) perpendiculaire à l'axe longitudinal (X) et d'un logement (13) délimité par deux parois (130) en vis-à-vis parallèles à cette surface plane (110), un étrier (20) fait de deux branches (21) qui sont parallèles, dont l'une au moins est destinée à reposer contre cette surface plane (11O) et qui sont reliées par un pont (22) oblique, d'un embout (23) longiligne qui est porté par le pont (22) entre les branches (21) avec une partie (230) cylindrique attenante au pont (22) et qui est destiné à être engagé dans le logement (13) pour être au contact de ses parois (130) et d'au moins une came (24) centrée sur cette partie cylindrique (230) qu'elle entoure au moins partiellement, un disque (30) avec un ajour (31) cylindrique qui est destiné à être monté sur cette partie cylindrique (230) et qui présente un côté (301) destiné à reposer contre la butée (12) et un côté (302) avec une contre-came (32) destinée à coopérer avec cette came (24), un socle (40) avec une embase (41) cunéiforme qui présente une face (410) oblique destinée à coopérer avec ce pont (22) et une face (411) perpendiculaire à l'axe longitudinal (X) et qui est transpercée (21) d'au moins une boutonnière (42) perpendiculaire aux branches et avec un piètement (43) fixé à cette face (411) et destiné à recevoir un pare-chocs, et des moyens de fixation (50) pour immobiliser notamment le socle (40) une fois les réglages faits.

2. Dispositif selon la revendication 1, caractérisé en ce que l'une au moins de ces cames (24) et contre-came (32) coopérant est une rampe hélicoïdale.

3. Dispositif selon l'une quelconque des revendications 1 et 2, caractérisé en ce que le logement (13) est une cavité voire une lumière.

4. Dispositif selon l'une quelconque des revendications 1 à 3, caractérisé en ce que l'embout (23) est une tige cylindrique avec au besoin un chanfrein (231) à son extrémité libre.

5. Dispositif selon l'une quelconque des revendications 1 à 4, caractérisé en ce que l'embase (41) est transpercée de deux boutonnières (42) parallèles perpendiculaires aux branches (21) de l'étrier (20).

6. Dispositif selon l'une quelconque des revendications 1 à 5, caractérisé en ce que les moyens de fixation (50) comprennent des trous (51) taraudés ou des écrous dans les branches (21) et dans le pont (22) et des boulons (52) traversant au moins une boutonnière (42) ou fentes et vissés dans les trous (51) ou écrous.

7. Dispositif selon l'une quelconque des revendications 1 à 6, caractérisé en ce que le piètement (43) comprend un pilier (430) monté sur la face (411) de l'embase (41) et une plaque (431) destinée à recevoir un pare-chocs.

8. Dispositif selon la revendication 7, caractérisé en ce que le pilier (430) est un absorbeur d'énergie interchangeable.

## Claims

1. Adjustable device for mounting a bumper on the structure of an automotive land vehicle, allowing a certain range of movement with three degrees of freedom along the traditional longitudinal axis (X), transverse axis (Y) and vertical axis (Z) of a vehicle, characterised in that it comprises a support (10) associated with the structure and made up of a rest (11) having at least one flat surface (110) parallel to the longitudinal axis (X) and transverse axis (Y) of the vehicle, an abutment (12) perpendicular to the longitudinal axis (X) and a recess (13) bounded by two opposing walls (130) parallel to this flat surface (110), a strap (20) formed by two parallel branches (21), at least one of which is adapted to rest against said flat surface (110) and which are connected by an oblique bridge (22), an elongate endpiece (23) which is carried by the bridge (22) between the branches (21) with a cylindrical portion (230) adjoining the bridge (22), said portion (230) being adapted to engage in the recess (13) in order to come into contact with the walls (130) thereof and at least one cam (24) centred on said cylindrical portion (230) which it surrounds at least partially, a disc (30) having a cylindrical opening (31) adapted to be mounted on said cylindrical portion (230) and having one side (301) adapted to rest on the abutment (12) and one side (302) with a counter-cam (32) adapted to co-operate with the cam (24), a base (40) having a wedge-shaped seating (41) which has an oblique surface (410) adapted to co-operate with the bridge (22) and a surface (411) perpendicular to the longitudinal axis (X), said surface (411) being pierced (21) with at least one eyelet (42) perpendicular to the branches and with a base member (43) fixed to said surface (411) and adapted to receive a bumper, and fixing means (50) for immobilising the base (40), in particular, once the adjustments have been made.

2. Device according to claim 1, characterised in that at least one of these co-operating cams (24) and counter-cam (32) is a helical ramp.

3. Device according to one of claims 1 and 2, characterised in that the recess (13) is a cavity, specifically an opening.

4. Device according to any one of claims 1 to 3, characterised in that the endpiece (23) is a cylindrical rod which has a chamfer (231) at its free end, if required.

5. Device according to any one of claims 1 to 4, characterised in that the seating (41) is drilled with two parallel eyelets (42) perpendicular to the branches (21) of the strap (20).

6. Device according to any one of claims 1 to 5, characterised in that the fixing means (50) comprise tapped holes (51) or nuts in the branches (21) and in the bridge (22) and bolts (52) passing through at least one eyelet (42) or slot and screwed into the holes (51) or nuts.

7. Device according to any one of claims 1 to 6, characterised in that the base member (43) comprises a pillar (430) mounted on the surface (411) of the seating (41) and a plate (431) adapted to receive a bumper.

8. Device according to claim 7, characterised in that the pillar (430) is an interchangeable energy absorber.

## Patentansprüche

1. Einstellbare Befestigungsvorrichtung für einen Stoßfänger an einer Struktur eines terrestrischen Kraftfahrzeuges, die eine bestimmte Bewegungsfreiheit mit drei Freiheitsgraden entlang der herkömmlichen Längsachse (X), der Querachse (Y) und der vertikalen Achse (Z) eines Fahrzeuges ermöglicht, dadurch gekennzeichnet, daß sie einen Halter (10), der der Struktur zugeordnet ist und mit einer Anlage (11) mit wenigstens einer ebenen Fläche (110) parallel zu der Längsachse (X) und der Querachse (Y) des Fahrzeuges, einem Anschlag (12) senkrecht zu der Längsachse (X) und einer Ausnehmung (13), die durch zwei gegenüberliegende Wände (130) parallel zu dieser ebenen Fläche (110) begrenzt ist, versehen ist, einen Bügel (20), der aus zwei Beinen (21), die parallel sind, von denen zumindest eines dazu bestimmt ist, an der ebenen Fläche (110) zu ruhen und die durch eine schrägverlaufende Brücke (22) verbunden sind, aus einem länglichen Ansatz (23), der von der Brücke (22) zwischen den Beinen (21) getragen wird, mit einem zylindrischen Abschnitt (230), der an die Brücke (22) angrenzt und der dazu bestimmt ist, in die Ausnehmung (13) einzugreifen, damit er mit ihren Wänden (130) in Kontakt ist, und aus wenigstens einer Kurvenfläche (24), die auf den zylindrischen Abschnitt (230) zentriert ist, den sie zumindest teilweise umgibt, besteht, eine Scheibe (30) mit einem zylindrischen Durchbruch (31), der dazu bestimmt ist, auf diesen zylindrischen Abschnitt (230) aufgesetzt zu werden, die eine Seite (301), dazu bestimmt, an dem Anschlag (12) zu ruhen, und eine Seite (302) mit einer Gegen-Kurvenfläche (32), dazu bestimmt, mit dieser Kurvenfläche (24) zusammenzuwirken, zeigt einen Sockel (40) mit einer keilförmigen Basis (41), die eine schrägverlaufende Fläche (410) zeigt, dazu bestimmt, mit dieser Brücke (22) zusammenzuwirken, und eine Fläche (411), die senkrecht zu der Längsachse (X) liegt und die von wenigstens einer Aussparung (42) senkrecht zu den Beinen (21) durchsetzt ist und mit einem Gestell (43), das an dieser Fläche (411) befestigt ist und dazu bestimmt ist, einen Stoßfänger aufzunehmen, und Befestigungsvorrichtungen (50), um insbesondere den Sockel (40) unbeweglich zu halten, wenn einmal die Einstellungen vorgenommen sind, aufweist.

2. Vorrichtung nach Anspruch 1, dadurch gekennzeichnet, daß wenigstens eine von Kurvenflächen (24) und Gegen-Kurvenfläche (32), die zusammenwirken, eine wendelartige Rampe ist.

3. Vorrichtung nach einem der Ansprüche 1 und 2, dadurch gekennzeichnet, daß die Ausnehmung (13) ein Hohlraum bzw. ein Langloch ist.

4. Vorrichtung nach einem der Ansprüche 1 bis 3, dadurch gekennzeichnet, daß der Ansatz (23) eine zylindrische Stange ist, mit gegebenenfalls einer Abschrägung (231) an ihrem freien Ende.

5. Vorrichtung nach einem der Ansprüche 1 bis 4, dadurch gekennzeichnet, daß die Basis (41) von zwei parallelen Aussparungen (42) durchsetzt ist, die senkrecht zu den Beinen (21) des Bügels (20) verlaufen.

6. Vorrichtung nach einem der Ansprüche 1 bis 5, dadurch gekennzeichnet, daß die Befestigungsvorrichtungen (50) Gewindelöcher (51) oder Muttern in den Beinen (21) und in der Brücke (20) und Bolzen (52), die wenigstens eine Aussparung (42) oder Schlitze durchqueren und in die Löcher (51) oder Muttern geschraubt sind, aufweisen.

7. Vorrichtung nach einem der Ansprüche 1 bis 6, dadurch gekennzeichnet, daß das Gestell (43) einen Pfosten (430), der auf der Fläche (411) der Basis 41 angebracht ist, und eine Platte (431), die dazu bestimmt ist, einen Stoßfänger aufzunehmen, aufweist.

8. Vorrichtung nach Anspruch 7, dadurch gekennzeichnet, daß der Pfosten (430) ein austauschbarer Energieabsorber ist.
